# EUROPÄISCHE PATENTANMELDUNG

(11) **EP 4 601 183 A1**
(43) Veröffentlichungstag der Anmeldung: **13.08.2025**
(21) Anmeldenummer: 24157060.5
(22) Anmeldetag: 12.02.2024
(51) Int. Cl.: H02P 6/15, H02P 6/16, H02P 21/18

(54) **VERFAHREN UND EINRICHTUNG ZUR INDIREKTEN FELDORIENTIERTEN REGELUNG EINES BÜRSTENLOSEN GLEICHSTROMMOTORS**

(71) Anmelder: Hilti Aktiengesellschaft, 9494 Schaan (LI)
(72) Erfinder: Liu, Qin, 85716 Unterschleißheim (DE); Hurka, Florian, 86459 Margertshausen (DE); Wißmach, Walter, 80637 Muenchen (DE)
(74) Vertreter: Hilti Aktiengesellschaft Corporate Intellectual Property

(57) **Zusammenfassung**

Die Erfindung betrifft ein Verfahren und eine elektronische Einrichtung zur indirekten feldorientierten Regelung (FOC) eines bürstenlosen Gleichstrommotors (1) unter Verwendung von digitalen Hall-Sensoren (3a - 3c) zur Erfassung der aktuellen Rotorposition des Gleichstrommotors (1) zwecks Drehmomentregelung, wobei eine elektrische Umdrehung des Rotors (2) durch mehrere (n) äquidistant zueinander bezüglich des Rotorumfangs angeordnete digitale Hall-Sensoren (3a - 3c) in doppelt (2n) so viel Sektoren unterteilt wird, wobei jeder Sektor einem definierten Hall-Muster entspricht und ein Wechsel des Hallsignals als eine durch die Drehung des Rotors (2) bewirkte Überschreitung der Grenze eines Sektors interpretiert wird, um einen schrittweise konstanten Rotorwinkel (α) zur Bestimmung der aktuellen Rotorposition für die feldorientierte Regelung anzuwenden.

## Beschreibung

Die vorliegende Erfindung betrifft ein Verfahren sowie eine elektronische Einrichtung zur feldorientierten Regelung eines bürstenlosen Gleichstrommotors unter Verwendung von digitalen HALL-Sensoren zur Erfassung der aktuellen Rotorposition des Gleichstrommotors zwecks Drehmomentregelung.

Das Einsatzgebiet der Erfindung erstreckt sich insbesondere auf solche Elektrohandwerkzeuge, welche im Einsatz einem Bremsmoment unterliegen, wie beispielsweise ein Elektroschrauber beim Lösen einer Schraube oder ein Bohrhammer beim Lösen eines festsitzenden Bohrers. All sind einer diese Elektrohandwerkzeuge stark schwankenden Belastung während des Betriebes ausgesetzt, anders als beispielsweise ein Elektrohammer, welcher mit relativ konstanter Drehzahl und Antriebsmoment betrieben wird.

### Stand der Technik

Die hier interessierende feldorientierte Regelung (FOC = field oriented controlling) ist gewöhnlich eine der am häufigsten verwendeten Regelungsstrategien für den Antrieb bürstenloser Gleichstrommotoren (BLDC-Motor = brushless direct current motor), welche auch auf dem Gebiet der Elektrohandwerkzeuge Anwendung findet. Die allgemein bekannte FOC verbessert das dynamische Verhalten des Antriebs und liefert ein optimales Drehmoment, insbesondere bei einem gleichförmigen Antrieb. Das Grundkonzept der FOC ist die Betrachtung von zeitlichen Momentanwerten. Somit werden die elektrischen Wechselgrößen eines dreiphasigen Motors nicht als raumfest behandelt, sondern drehen sich mit dem Rotor. Das bedeutet, dass die am Stator gemessenen Dreiphasenströme in Rotorkoordinaten umgewandelt werden. Da das Bezugssystem statisch ist, kann der Regler mit Gleichstromgrößen anstelle von Wechselgrößen arbeiten. Anders als bei einer alterna-tiven Blockkommutierungssteuerung, bei der die Kommutierungszustände alle 60 elektrischen Grad umgeschaltet werden, überwacht die FOC kontinuierlich die Rotorposition und schaltet ständig die Erregung der drei Statorwicklungen um, so dass ein optimales Drehmoment des Rotors erzeugt wird.

Grundsätzlich existieren zwei allgemeine Methoden der FOC, nämlich die direkte FOC und die indirekte FOC. Beide Methoden unterscheiden sich in der Art, wie der Rotorwinkel/die Lageerfassung bestimmt wird. Bei der direkten FOC wird der Rotorwinkel über die Klemmspannung und die Klemmströme berechnet, während bei der im Rahmen der vorliegenden Erfindung interessierenden indirekten FOC die Rotorposition gemessen wird. Somit wird hierfür eine zusätzliche Positionserfassung benötigt, welche Gegenstand der vorliegenden Erfindung ist.

Eine bereits allgemein bekannte Methode zur Messung der Rotorposition basiert auf einem Positionsgeber, beispielsweise einem anisothropen Magnetowiderstandssensor (AMR), Resolver oder Encoder. Trotz hoher Messgenauigkeit eines AMR-Sensors ist dieser recht aufwändig und die Unterbringung erfordert einen relativ hohen zusätzlichen Platzbedarf innerhalb eines BLDC-Motors.

Für Elektrohandwerkzeuge der hier interessierenden Art, bei denen die Kompaktheit des Werkzeuggehäuses eine wesentliche Rolle spielt, ist die Verwendung eines AMR-Sensors daher ungünstig.

Als Alternative können auch die im Rahmen der vorliegenden Erfindung zum Einsatz kommenden digitalen HALL-Sensoren verwendet werden, um die Rotorposition diskret zu erfassen. So messen drei digitale HALL-Sensoren die Rotorposition gewöhnlich mit einer Genauigkeit von 60 elektrischen Grad.

Es ist bereits versucht worden, mittels digitaler HALL-Sensoren die Motordrehzahl in der elektronischen Steuereinheit auf der Grundlage der Frequenz der HALL-Unterbrechungen zu berechnen und die kontinuierliche Rotorposition zu schätzen, welche dann in den FOC-,Algorithmus eingespeist wird. Dabei kann ein PLL-Verfahren (PLL = phase-locked-loop) zur Anwendung kommen, um eine Winkel-Linearisierung des von den HALL-Sensoren als stufenförmige Wellenform erscheinenden Signals herbeizuführen. Dabei wird das PLL-Verfahren zur Gewinnung eines geschätzten kontinuierlichen Rotorwinkels in der Regel in Abhängigkeit von der PWM-Frequenz (PWM = pulse-wide-modulation) in entsprechende Software der elektronischen Steuereinheit implementiert. Das PLL-Verfahren empfängt digitale HALL-Interrupts als Eingangssignal und schätzt die quasi-kontinuierlichen Rotorwinkel, die als FOC-Eingangssignal verwendet werden. Der so geschätzte Rotorwinkel ist zwar immer noch quantisiert, aber die wesentlich höhere Auflösung im Vergleich zu der ansonsten stufenförmigen Wellenform führt zu einem quasi kontinuierlichen Rotorwinkel.

Diese Methode funktioniert insbesondere bei hohen Drehzahlen, zeigt jedoch Schwächen bei niedrigen Drehzahlen, beispielsweise dann, wenn der Gleichstrommotor unter hoher Last anläuft, wie dies beispielsweise bei einem elektrischen Schraubendreher zum Lösen einer Schraube oder einem Bohrhammer zum Lösen festsitzender Bohrer und dergleichen auftritt. Denn während des Motorstarts liegen sehr begrenzte Informationen für eine zuverlässige Schätzung des Rotorwinkels nach dem PLL-Verfahren vor, da die Anzahl der eingehenden HALL-Interrupts sehr gering ist. Die Schätzung der Rotorposition erfordert eine genaue Berechnung der Motordrehzahl, während die eingehenden HALL-Interrupts nicht ausreichen, um eine hinreichende Genauigkeit zu erzielen. Die ungenaue Geschwindigkeitsschätzung führt letztlich zu einer unzuverlässigen Schätzung der Rotorposition. Wenn der Motor unter Last anläuft, handelt es sich um einen sehr dynamischen Vorgang. Die Motordrehzahl kann hierbei stark schwanken. Dies führt ebenfalls zu unzuverlässigen Schätzwerten für die Rotorposition.

Wenn ein ungenauer Rotorwinkel/Rotorposition in einen FOC-Algorithmus eingegeben wird, kann das durch die Erregung der Spule erzeugte Magnetfeld das Motordrehmoment nicht effizient aufbauen. Gelingt es dem Gleichstrommotor nicht, innerhalb der ersten paar Umdrehungen ein ausreichendes Drehmoment aufzubauen, läuft dieser nicht an.

Es ist daher die Aufgabe der vorliegenden Erfindung eine Implementierung einer indirekten FOC in einem bürstenlosen Gleichstrommotor unter Verwendung von digitalen HALL-Sensoren zur Erfassung der aktuellen Rotorposition zu ermöglichen, um einen optimalen Antrieb für elektrische Maschinen mit hohem Anlaufmoment und dynamischem Drehzahlverhalten zu schaffen.

### Offenbarung der Erfindung

Die Aufgabe wird verfahrenstechnisch durch Anspruch 1 gelöst. Der nebengeordnete Anspruch 10 beschreibt eine hiermit korrespondierende elektronische Einrichtung zur Durchführung des Verfahrens. Der Anspruch 11 ist auf ein Elektrohandwerkzeug mit einer solchen elektronischen Einrichtung gerichtet.

Die Erfindung schließt die verfahrenstechnische Lehre ein, dass eine elektrische Umdrehung des Rotors eines BLDC-Motors durch mehrere äquidistant zueinander bezüglich des Rotorumfangs angeordnete digitale Hall-Sensoren in doppelt so viel Sektoren unterteilt wird, wobei jeder Sektor einem definierten Hall-Muster entspricht und ein Wechsel des Hallsignals als eine durch die Drehung des Rotors bewirkte Überschreitung der Grenze eines Sektors interpretiert wird, um einen schrittweise konstanten Rotorwinkel α zur Bestimmung der aktuellen Rotorposition für die feldorientierte Regelung anzuwenden.

Durch die erfindungsgemäße Lösung wird mit anderen Worten also eine Schätzung der Rotorposition insbesondere während der ersten Rotorumdrehungen aus dem Stillstand heraus vorgenommen, wenn die Motordrehzahl aufgrund des Mangels an Informationen und des dynamischen Lastmoments nicht genau geschätzt werden kann. Indem der FOC-Algorithmus mit dem erfindungsgemäß gewonnenen schrittweisen konstanten Rotorwinkel-Signal als Eingangswert gespeist wird, wird die FOC zuverlässiger als bei einer herkömmlich ungenauen Schätzung der Motordrehzahl und damit einer entsprechend ungenauen Schätzung der Rotorposition.

Elektrohandwerkzeuge, bei denen die erfindungsgemäße Lösung implementiert ist, erreichen hierdurch ein Anlaufmoment, das mindestens so hoch ist, wie das einer herkömmlichen Rechtecksteuerung und weisen bei einer hohen Drehzahl einen vergleichbar hohen Wirkungsgrad auf wie herkömmlich feldorientiert geregelte Gleichstrommotoren, bei denen die Rotorposition mit einem hochauflösenden Encoder gemessen wird.

Gemäß einer bevorzugten Ausführungsform kann die Auswahl des schrittweise konstanten Rotorwinkels dahingehend optimiert werden, dass das gemittelte Motordrehmoment eines Sektors am höchsten und die Drehmomentwelligkeit am niedrigsten ist, wenn von einem Sektor auf einen anderen umgeschaltet wird. Gemäß einer bevorzugten Ausführungsform der Erfindung wird mit drei digitalen HALL-Sensoren eine Umdrehung des Rotors in sechs Sektoren von je 60°unterteilt, wobei jeder Sektor einem definierten HALL-Muster entspricht, mit vorzugsweise folgenden Binärwerten: 101, 001, 011, 010, 110, 100. Der Wechsel des HALL-Signals zeigt an, dass der Rotor die Grenze eines Sektors überschreitet.

Vorzugsweise wird die auf erfindungsgemäße Weise ermittelte aktuelle Rotorposition bei der Regelung des bürstenlosen Gleichstrommotors in einem niedrigen Drehzahlbereich zwischen 0 bis 15% einer Leerlaufdrehzahl angewendet, um während der Anlaufphase beispielsweise eines Elektroschraubers eine funktionsgerechte feldorientierte Regelung zu erzielen.

Vorzugsweise wird der bürstenlose Gleichstrommotor über seinen gesamten Drehzahlbereich mit einer FOC betrieben, wobei im niedrigen Drehzahlbereich nach Maßgabe des schrittweise konstanten Rotorwinkels und im anschließenden höheren Drehzahlbereich nach Maßgabe eines herkömmlich geschätzten kontinuierlichen Rotorwinkels geregelt wird. Dadurch kann der Gleichstrommotor aus dem Stillstand heraus das gleiche oder sogar ein höheres Anlaufmoment erreichen als bei einer herkömmlichen Ansteuerung. Darüber hinaus wird der hohe Wirkungsgrad bei hohen Drehzahlen genutzt, wenn die FOC die genaue Rotorposition empfängt und die optimale Regelung durchführt.

Der Übergang zwischen einer Regelung nach einem schrittweise konstanten Rotorwinkel und einem geschätzten kontinuierlichen Rotorwinkel wird vorzugsweise unter Berücksichtigung einer Hysterese durchgeführt, um ein ungewolltes Hin- und Herschalten im Übergangsbereich zu vermeiden.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung von Bestandteilen eines bürstenlosen Gleichstrommotors mit mehreren Hallsensoren,
- Fig. 2: eine graphische Darstellung von Sektoren einer Umdrehung des Rotors mit zugeordneten Binärwerten eines definierten Hall-Musters mit drei Hall-Sensoren,
- Fig. 3: eine graphische Darstellung des Verlaufs eines im Ergebnis des erfindungsgemäßen Verfahrens vorgegebenen schrittweisen konstanten Rotorwinkel α im Zusammenhang mit zu-gehörigen Phasenströmen und dem Motormoment eines hierüber angesteuerten bürstenlosen Gleichstrommotors,
- Fig. 4: eine graphische Darstellung eines Übergangs zwischen einem diskreten Rotorwinkel und einem kontinuierlichen Rotorwinkel als hysteresebehaftete FOC-Eingangswerte,
- Fig. 5: eine graphische Darstellung zur Bestimmung eines Umschaltpunkts von einem anfänglich schrittweise konstanten Rotorwinkel zu einem nachfolgenden geschätzten kontinuierlichen Rotorwinkel, und
- Fig. 6: eine Blockschaltbilddarstellung der Funktionsweise der elektronischen Einrichtung zur Durchführung des erfindungsgemäßen Verfahrens.

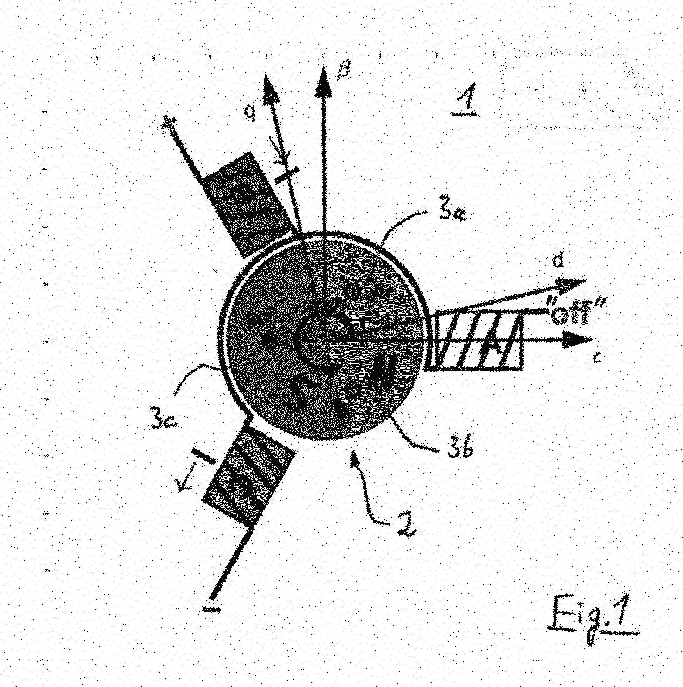

Gemäß Fig. 1 umfasst der hier stark schematisiert dargestellte bürstenlose Gleichstrommotor 1 drei äquidistant zueinander bezüglich des Umfangs eines Rotors 2 angeordnete digitale HALL-Sensoren 3a bis 3c. Die drei digitalen HALL-Sensoren 3a bis 3c unterteilen bekanntermaßen eine elektrische Umdrehung des Rotors 2 in doppelt so viel, also sechs Sektoren von je 60°. Der Rotor 2 umfasst einen Permanentmagneten mit einem Südpol S und einem Nordpol N. Statorseitig sind ebenfalls in Umfangsrichtung äquidistant zueinander positionierte elektrische Spulenwicklungen A, B, C angeordnet.

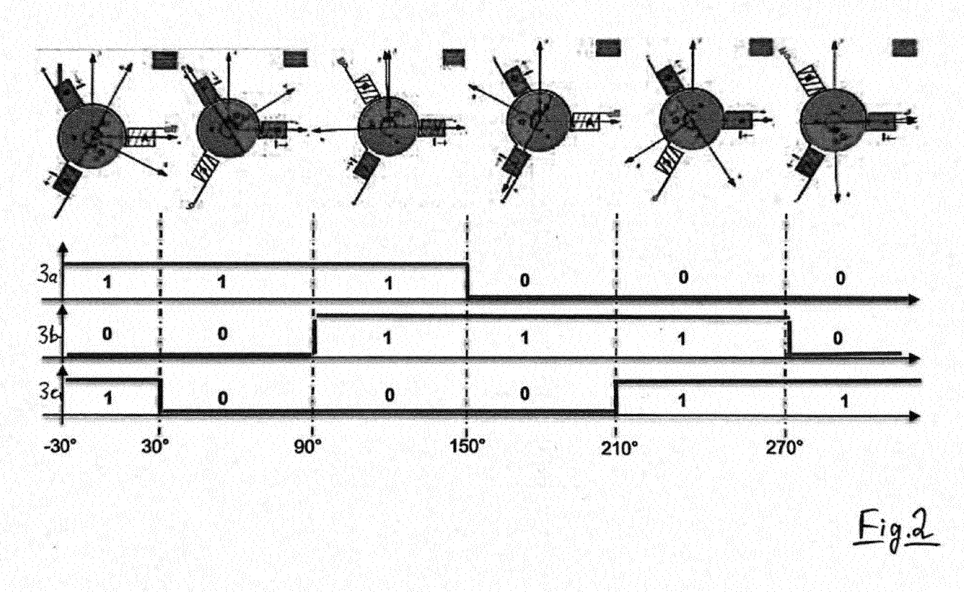

Gemäß Fig. 2 ergeben sich infolge der vorstehend beschriebenen Konfiguration über eine Umdrehung von 360° das dargestellte HALL-Muster. Die Binärzahl 1 repräsentiert den Nordpol, wohingegen die Binärzahl 2 den Südpol des Permanentmagneten repräsentiert. Aus den Signalen der drei digitalen HALL-Sensoren 3a bis 3c in jedem der sechs Sektoren von je 60° ergibt sich das dargestellte HALL-Muster 101, 001, 011, 010, 110, 100. Dieses HALL-Muster wird als High- bzw. Low-Spannungspegel an die elektronische Einrichtung zur indirekten feldorientierten Regelung übertragen. Das so definierte HALL-Muster besteht aus (Winkel-)Sektoren mit einem Öffnungswinkel von 60°, in dem sich der Rotor des bürstenlosen Gleichstrommotors aktuell befindet, wodurch die elektronische Einrichtung die entsprechenden Motorspulen bestromen kann, um ein Drehmoment aufzubauen.

Dieses HALL-System löst also aufgrund der nur drei HALL-Sensoren den Winkel nur in 60°-Schritten auf. Jeder der sechs Sektoren entspricht damit einem definierten HALL-Muster und erfindungsgemäß wird ein Wechsel des HALL-Signals als eine durch die Drehung des Rotors bewirkte Überschreitung der Grenze eines Sektors interpretiert, um einen schrittweise konstanten Rotorwinkel zur Bestimmung der aktuellen Rotorposition für die feldorientierte Regelung (FOC) anzuwenden.

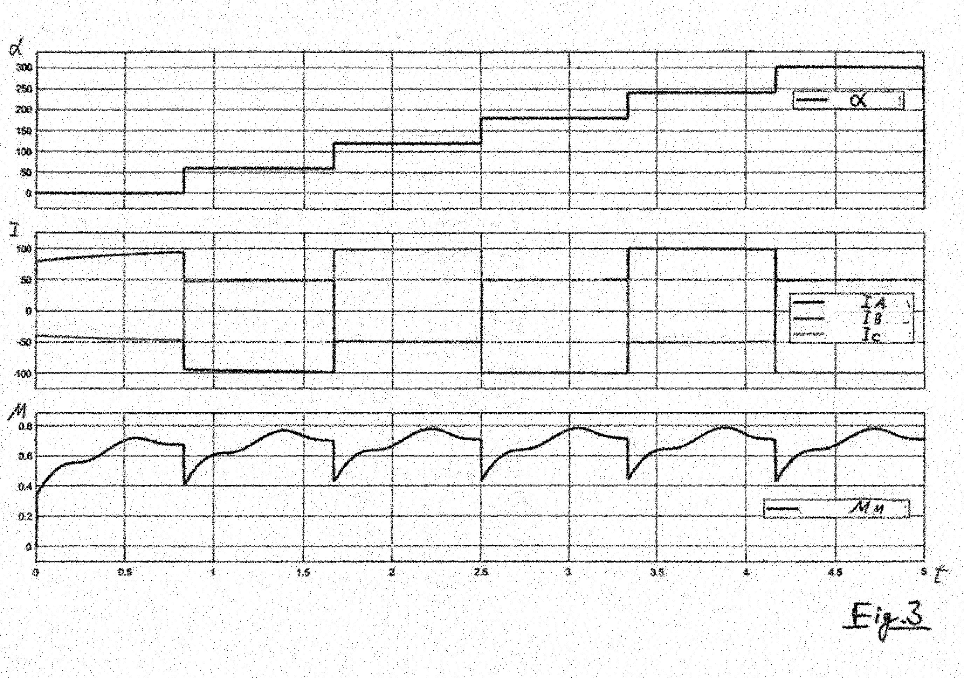

Gemäß Fig. 3 ist im oberen Bereich der besagte schrittweise konstante Rotorwinkel α über eine aus dem Start heraus betrachtete Anlaufzeit dargestellt, und zwar im Zusammenhang mit dem im mittleren Bereich der Abbildung dargestellten Phasenströme I_{A}, I_{B} und I_{C} sowie den im unteren Bereich dargestellten Verlauf des Motormoments M_{M}. Hieraus ist also ersichtlich, dass auch die mit den stark auf 60° Schritte quantisierte Verlauf des Rotorwinkels und nach den Regeln der FOC berechneten Ströme ein ausreichend großes Drehmoment erzeugen

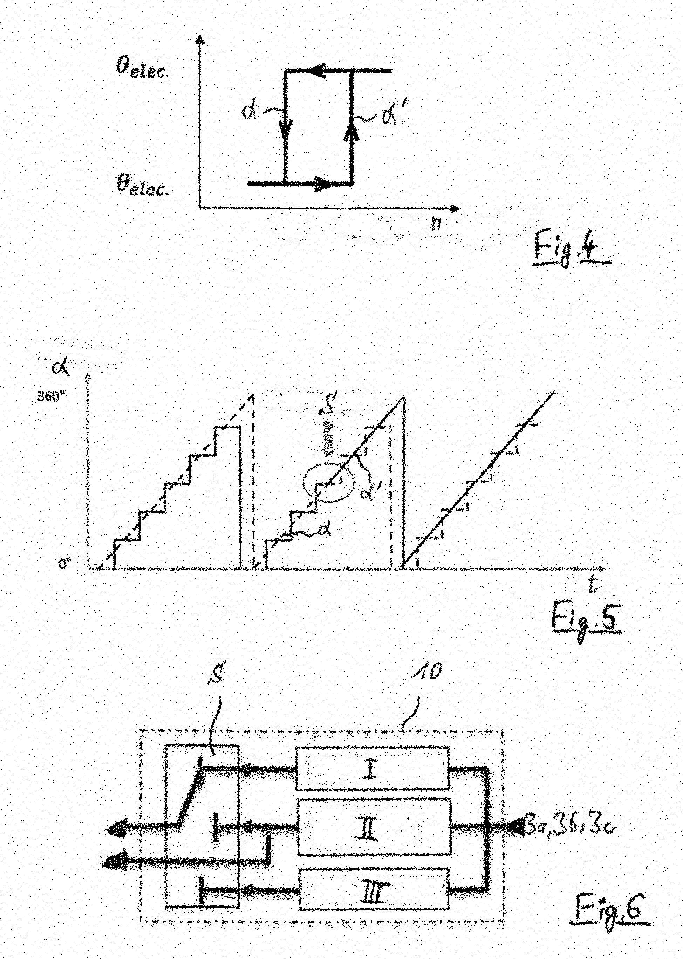

Gemäß Fig. 4 wird der Übergang zwischen einer anfänglichen Regelung mit einem schrittweise konstanten Rotorwinkel α und einem geschätzt kontinuierlichen Rotorwinkel α', welcher bereits linearisiert aus einem PLL-Algrothmus, welcher auf Grund der höheren Geschwindigkeit auch korrent arbeitet, kommt, unter Berücksichtigung einer dargestellten Hysterese hinsichtlich der Motordrehzahl n durchgeführt, um ein ungewolltes Hin- und Herschalten in diesem Übergangsbereich unterschiedlicher Regelungsstrategien zu vermeiden.

Hinsichtlich Fig. 5 erfolgt eine Glättung des Rotorwinkels α, α' für mehreren Umdrehungen 0° bis 360° aus dem Start heraus nach unterschiedlichen Maßgaben. Erfindungsgemäß wird der bürstenlose Gleichstrommotor über seinen gesamten Drehzahlbereich mit einer feldorientierten Regelung betrieben, wobei im niedrigen Drehzahlbereich - hier rein schematisch die ersten 1,5 Umdrehungen - nach Maßgabe des schrittweise konstanten Rotorwinkels α und in demgegenüber höheren Drehzahlbereich nach Maßgabe eines herkömmlich geschätzten kontinuierlichen Rotorwinkels α' geregelt wird. Dabei wird der geschätzte kontinuierliche Rotorwinkel α' durch die Anwendung eine PLL-Methode zur Linearisierung eines abgestuften Messwertverlaufs der durch die digitalen HALL-Sensoren erfassten aktuellen Motorposition bestimmt. An einem Umschaltpunkt S wird von einer FOC nach schrittweise konstantem Rotorwinkel α auf eine FOC mit geschätztem kontinuierlichen Rotorwinkel α' umgeschaltet, um nach dem Anlaufen des Rotors die Regelstrategien zu wechseln.

Gemäß Fig. 6 verwendet eine erfindungsgemäß ausgebildete elektronische Einrichtung zur Durchführung des vorstehend beschriebenen Verfahrens eine Steuereinheit 10 mit verschiedenen Regelstrategien, zwischen denen je nach Drehzahl und Belastung des bürstenlosen Gleichstrommotors per Schalter S umgeschaltet werden kann, und zwar die erfindungsgemäße feldorientierte Regelung nach Maßgabe eines schrittweise konstanten Rotorwinkels I für den unteren Drehzahlbereich, eine feldorientierte Regelung (FOC) nach Maßgabe eines herkömmlich geschätzten kontinuierlichen Rotorwinkels gemäß einer zweiten Regelungsstrategie II, einen Regelungsstrategie III, welche den Winkel mit Hilfe eines PLL-Algorithmus' linearisiert. Im kleinsten Drehzahlbereich (ca. 0 bis 5% der Leerlaufdrehzahl) wird Strategie I verwendet, in Bereich II (5 bis 15% der LL-Drehzahl) werden die Hallsignale linear extra-/interpoliert und im dritten Bereich über eine PLL linearisiert.

## Patentansprüche

1. Verfahren zur indirekten feldorientierten Regelung (FOC) eines bürstenlosen Gleichstrommotors (1) unter Verwendung von digitalen Hall-Sensoren (3a - 3c) zur Erfassung der aktuellen Rotorposition des Gleichstrommotors (1) zwecks Drehmomentregelung, wobei eine elektrische Umdrehung des Rotors (2) durch mehrere (n) äquidistant zueinander bezüglich des Rotorumfangs angeordnete digitale Hall-Sensoren (3a - 3c) in doppelt (2n) so viel Sektoren unterteilt wird, **dadurch gekennzeichnet, dass** jeder Sektor einem definierten Hall-Muster entspricht und ein Wechsel des Hallsignals als eine durch die Drehung des Rotors (2) bewirkte Überschreitung der Grenze eines Sektors interpretiert wird, um einen schrittweise konstanten Rotorwinkel (α) zur Bestimmung der aktuellen Rotorposition für die feldorientierte Regelung anzuwenden.

2. Verfahren nach Anspruch 1,
**dadurch gekennzeichnet, dass** die Bestimmung des schrittweise konstanten Rotorwinkels (α) für einen Sektor bei einem Maximum des gemittelten Motordrehmoments eines Sektors in Verbindung mit einem Minimum der Drehmomentwelligkeit erfolgt, wenn von einem Sektor auf den anderen Sektor umgeschaltet wird.

3. Verfahren nach Anspruch 1,
**dadurch gekennzeichnet, dass** zur Bestimmung des schrittweise konstanten Rotorwinkels (α) genau drei digitale Hall-Sensoren (3a - 3c) zur Unterteilung in sechs Sektoren verwendet werden.

4. Verfahren nach Anspruch 3,
**dadurch gekennzeichnet, dass** die sechs Sektoren einem definierten Hall-Muster mit folgenden Binärwerten entsprechen: 101, 001, 011, 010, 110, 100.

5. Verfahren nach Anspruch 1,
**dadurch gekennzeichnet, dass** die hieraus ermittelte aktuelle Rotorposition bei der Regelung des bürstenlosen Gleichstrommotors (1) in einem niedrigen Drehzahlbereich zwischen 0 bis 15% einer Leerlaufdrehzahl angewendet wird.

6. Verfahren nach Anspruch 5,
**dadurch gekennzeichnet, dass** der bürstenlose Gleichstrommotor (1) über seinen gesamten Drehzahlbereich mit einer feldorientierten Regelung (FOC) betrieben wird, wobei im niedrigen Drehzahlbereich nach Maßgabe des schrittweise konstanten Rotorwinkels (α) und im demgegenüber höheren Drehzahlbereich nach Maßgabe eines herkömmlich geschätzten kontinuierlichen Rotorwinkels (α') geregelt wird.

7. Verfahren nach Anspruch 6,
**dadurch gekennzeichnet, dass** der Übergang zwischen einer Regelung nach einem schrittweise konstanten Rotorwinkels (α) und einem geschätzten kontinuierlichen Rotorwinkel (α') unter Berücksichtigung einer Hysterese durchgeführt wird, um ein ungewolltes Hin- und Herschalten im Übergangsbereich zu vermeiden.

8. Verfahren nach Anspruch 6,
**dadurch gekennzeichnet, dass** der geschätzte kontinuierliche Rotorwinkel (α') durch Anwendung einer PLL-Methode zur Linearisierung eines abgestuften Messwertverlaufs der durch die digitalen Hall-Sensoren (3a - 3c) erfassten aktuellen Rotorposition bestimmt wird.

9. Verfahren nach Anspruch 6,
**dadurch gekennzeichnet, dass** ein Umschaltpunkt (S) von einer FOC nach dem schrittweise konstanten Rotorwinkel (α) auf eine FOC nach dem geschätzten kontinuierlichen Rotorwinkel (α') definiert wird.

10. Elektronische Einrichtung zur Durchführung des Verfahrens nach einem der vorstehenden Ansprüche, umfassend digitale Hall-Sensoren (3a - 3c) zur Erfassung der aktuellen Rotorposition des Gleichstrommotors (1), wobei die digitalen Hall-Sensoren (3a - 3c) derart angeordnet sind, dass eine elektrische Umdrehung des Rotors (2) durch mehrere (n) äquidistant zueinander bezüglich des Rotorumfangs angeordnete digitale Hall-Sensoren () in doppelt (2n) so viel Sektoren unterteilt sind, **dadurch gekennzeichnet, dass** eine elektronische Steuereinheit (10) vorgesehen ist, die dazu eingerichtet ist, jedem Sektor ein definiertes Hall-Muster zuzuordnen und ein Wechsel des Hallsignals als eine durch die Drehung des Rotors (2) bewirkte Überschreitung der Grenze eines Sektors zu interpretieren, um einen schrittweise konstanten Rotorwinkel (α) für einen Sektor als aktuelle Rotorposition für die feldorientierte Regelung zu verwenden.

11. Elektrohandwerkzeug mit einer als bürstenloser Gleichstrommotor ausgebildeten Antriebseinheit, umfassend eine elektronische Einrichtung nach Anspruch 10.

12. Elektrohandwerkzeug nach Anspruch 11, wobei dieses als ein Elektroschrauber ausgebildet ist.
